(19) Europäisches Patentamt / European Patent Office / Office européen des brevets

(11) **EP 4 317 230 A1**

(12) **EUROPEAN PATENT APPLICATION**
published in accordance with Art. 153(4) EPC

(43) Date of publication:
**07.02.2024 Bulletin 2024/06**

(21) Application number: **22775672.3**

(22) Date of filing: **23.03.2022**

(51) International Patent Classification (IPC):
*C08F 290/06* (2006.01)    *C08F 2/50* (2006.01)
*C08J 9/30* (2006.01)    *C08G 18/00* (2006.01)
*C08G 18/67* (2006.01)

(52) Cooperative Patent Classification (CPC):
C08F 2/50; C08F 290/06; C08G 18/00;
C08G 18/67; C08J 9/30

(86) International application number:
**PCT/JP2022/013450**

(87) International publication number:
**WO 2022/202890 (29.09.2022 Gazette 2022/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.03.2021 JP 2021049020**

(71) Applicant: **Sunstar Engineering Inc.**
**Osaka 569-1134 (JP)**

(72) Inventors:
• **OMACHI Takuro**
**Takatsuki-shi, Osaka 569-1134 (JP)**
• **EBATA Akimi**
**Takatsuki-shi, Osaka 569-1134 (JP)**

(74) Representative: **Novagraaf International SA**
**Chemin de l'Echo 3**
**1213 Onex, Geneva (CH)**

(54) **PHOTOCURABLE COMPOSITION, PHOTOCURABLE FOAM COMPOSITION, URETHANE (METH)ACRYLATE COMPOUND, AND METHOD FOR PRODUCING FOAM**

(57) Provided are: a photocurable composition capable of forming a sealant composed of a foam endowed with excellent elongation and excellent tensile strength by being cured while foamed; a photocurable foam composition in which gas bubbles are included in the aforementioned photocurable composition; a urethane (meth)acrylate compound that is suitably used as a component of the aforementioned photocurable composition; and a method for producing a foam using the abovementioned photocurable composition. In this photocurable composition, which contains a urethane (meth)acrylate (A) and a photopolymerization initiator (C), a urethane (meth)acrylate compound having a specific structure that includes a urethane bond, has a polyether chain having a molecular weight within a specific range in the center, and has (meth)acryloyloxy groups at both ends of a linear polyether chain is used as the urethane (meth)acrylate (A).

**Description**

TECHNICAL FIELD

The present invention relates to a photocurable composition, a photocurable foam composition including bubbles of a gas in the photocurable composition, a urethane (meth)acrylate compound suitably used as a component of the photocurable composition and a method for manufacturing a foam using the photocurable composition.

BACKGROUND ART

When in the manufacturing of parts of various electrical and mechanical products and automobile parts, for example, a plurality of parts are assembled or parts having gaps are used, the mating surfaces or gaps of the parts are often sealed. As such a sealing method, a method is known in which a liquid material for forming a gasket called a FIPG (Formed In Place Gasket) is applied to the mating surfaces or the gaps while being foamed by gas, and is cured. According to this method, a sealant formed by foaming and curing the FIPG is used to seal the mating surfaces and the gaps of the parts.

As a curable composition which can be used as the FIPG, a photocurable sealing material is known which includes, in a specific ratio, (A) an oligomer including a (meth)acryloyl group having a weight average molecular weight of 10,000 to 30,000, (B) a (meth)acrylate monomer and (C) a polythiol compound (see Patent Document 1).

Patent Document 1: Japanese Patent No. 5693799

DISCLOSURE OF THE INVENTION

Problems to be Solved by the Invention

However, when the conventionally known curable composition as disclosed in Patent Document 1 is applied to the manufacturing of a foam to manufacture the foam, it is difficult to form a sealant of a foam which has both satisfactory elongation and satisfactory tensile strength.

The present invention is made in view of the problem described above, and an object of the present invention is to provide a photocurable composition which can form a sealant of a foam having both satisfactory elongation and satisfactory tensile strength by being cured while being foamed, a photocurable foam composition including bubbles of a gas in the photocurable composition, a urethane (meth)acrylate compound suitably used as a component of the photocurable composition and a method for manufacturing a foam using the photocurable composition.

Means for Solving the Problems

The present inventors have found that by using a photocurable composition including a urethane (meth)acrylate (A) and a photopolymerization initiator (C), in which as the urethane (meth)acrylate (A), a urethane (meth)acrylate compound having a specific structure is used, which includes a urethane bond, a polyether chain having a molecular weight in a specific range in the center, and (meth)acryloyloxy groups at both ends of a linear polyether chain, it is possible to solve the problem described above, with the result that the present inventors have completed the present invention. Specifically, the present invention provides (1) to (22) below.

(1) A photocurable composition including: a urethane (meth)acrylate (A); and a photopolymerization initiator (C), the urethane (meth)acrylate (A) including a urethane (meth)acrylate compound represented by a formula (A1) below:

$$(CH_2=CR^5-CO-O-R^4-O-CO-NH)_a-R^2-NH-CO-(O-R^1)_n-O-CO-NH-R^3-(NH-CO-O-R^4-O-CO-CR^5=CH_2)_b \quad (A1)$$

in which, in the formula (A1), $R^1$ is an alkylene group having 2 or more and 4 or less carbon atoms, $R^2$ is a group in which isocyanate groups are removed from an a+1-valent aliphatic isocyanate compound, $R^3$ is a group in which isocyanate groups are removed from a b+1-valent aliphatic isocyanate compound, a and b are each independently 1 or 2, $R^4$ is an alkylene group having 1 or more and 8 or less carbon atoms, $R^5$ is a hydrogen atom or a methyl group, a molecular weight of a unit represented by $-(O-R^1)_n-O-$ in the formula (A1) is 3000 or more and 30000 or less and n is a repetition number of oxyalkylene groups represented by $-O-R^1-$.

(2) The photocurable composition as described in aspect (1), in which a and b are each 1.

(3) The photocurable composition as described in aspect (1) or (2), in which the ratio of the mass of the urethane (meth)acrylate compound represented by the formula (A1) to the mass of the urethane (meth)acrylate (A) is equal to or greater than 60% by mass.

(4) The photocurable composition as described in aspect (3), in which $R^1$ is a propane-1,2-diyl group.

(5) The photocurable composition as described in any one of aspects (1) to (4) further including: a photopolymerizable monomer (B), in which the photopolymerizable monomer (B) is one or more selected from the group consisting of a tri(meth)acrylate (B1), a di(meth)acrylate (B2) and a mono(meth)acrylate (B3).

(6) The photocurable composition as described in any one of aspects (1) to (5), in which the photopolymerizable monomer (B) is at least one selected from the group consisting of a chain aliphatic tri(meth)acrylate (B1-1), a chain aliphatic di(meth)acrylate (B2-1), a chain aliphatic mono(meth)acrylate (B3-1) and an alicyclic mono(meth)acrylate (B3-2).

(7) The photocurable composition as described in any one of aspects (1) to (6), in which the photopolymerization initiator (C) includes at least one selected from the group consisting of an alkylphenone photopolymerization initiator, an acylphosphine oxide photopolymerization initiator and an oxime ester photopolymerization initiator.

(8) The photocurable composition as described in any one of aspects (1) to (10), in which the photocurable composition is used for manufacturing a foam through mixing with a gas and photocuring.

(9) A photocurable foam composition including: the photocurable composition as described in any one of aspects (1) to (8); and bubbles (E) of a gas dispersed in the photocurable composition.

(10) The photocurable foam composition as described in aspect (9), in which the gas is one or more selected from the group consisting of nitrogen, argon, xenon, krypton and carbon dioxide.

(11) The photocurable foam composition as described in aspect (9) or (10), in which the size of each of the bubbles (E) of the gas in a cured material which has been cured under atmospheric pressure is equal to or greater than 5 um and equal to or less than 200 um.

(12) A urethane (meth)acrylate compound represented by a formula (A1) below:

$$(CH_2=CR^5\text{-}CO\text{-}O\text{-}R^4\text{-}O\text{-}CO\text{-}NH)_a\text{-}R^2\text{-}NH\text{-}CO\text{-}(O\text{-}R^1)_n\text{-}O\text{-}CO\text{-}NH\text{-}R^3\text{-}(NH\text{-}CO\text{-}O\text{-}R^4\text{-}O\text{-}CO\text{-}CR^5=CH_2)_b \quad (A1)$$

in which, in the formula (A1), $R^1$ is an alkylene group having 2 or more and 4 or less carbon atoms, $R^2$ is a group in which isocyanate groups are removed from an a+1-valent aliphatic isocyanate compound, $R^3$ is a group in which isocyanate groups are removed from a b+1-valent aliphatic isocyanate compound, a and b are each independently 1 or 2, $R^4$ is an alkylene group having 1 or more and 8 or less carbon atoms, $R^5$ is a hydrogen atom or a methyl group, a molecular weight of a unit represented by $-(O\text{-}R^1)_n\text{-}O-$ in the formula (A1) is 3000 or more and 30000 or less and n is a repetition number of oxyalkylene groups represented by $-O\text{-}R^1-$.

(13) A method for manufacturing a foam, including: mixing the photocurable composition as described in any one of aspects (1) to (8) with a gas to generate a photocurable foam composition including bubbles; and
exposing the photocurable foam composition to photocure the photocurable foam composition.

(14) The method for manufacturing a foam as described in aspect (13), where the generating of the photocurable foam composition includes:

  a first step of supplying the photocurable composition which is pressure fed in a first conduit and the gas which is pressure fed via a second conduit by using a first pump, and mixing the photocurable composition and the gas to generate a mixture;
  a second step of dispersing the gas into the photocurable composition in a dispersion conduit in a state where the mixture is pressurized; and
  a third step of foaming the mixture by discharging the mixture which has passed through the dispersion conduit so as to generate the photocurable foam composition.

(15) The method for manufacturing a foam as described in aspect (13) or (14), in which the exposing is LED exposure.

(16) The method for manufacturing a foam as described in any one of aspects (13) to (15), in which the oxygen concentration on a surface of the photocurable foam composition when the photocurable foam composition is exposed is equal to or less than 3% by volume.

(17) The method for manufacturing a foam as described in any one of aspects (13) to (16), in which among (I) the generating of the photocurable foam composition, (II) setting the oxygen concentration on the surface of the photocurable foam composition to equal to or less than 1% by volume and (III) the curing of the photocurable foam composition by the exposing, (I) and (III) or all of (I) to (III) are achieved with a manipulator simultaneously or continuously.

(18) The method for manufacturing a foam as described in any one of aspects (13) to (17), in which the setting of the oxygen concentration on the surface of the photocurable foam composition to equal to or less than 3% by volume is performed by a method of spraying a gas other than oxygen to the surface of the photocurable foam composition. (19) The method for manufacturing a foam as described in any one of aspects (13) to (18), in which the setting of the oxygen concentration on the surface of the photocurable foam composition equal to or less than 3% by volume is performed by discharging the gas other than oxygen from the photocurable foam composition when the photocurable foam composition is generated.

Effects of the Invention

According to the present invention, it is possible to provide a photocurable composition which can form a sealant of a foam having both satisfactory elongation and satisfactory tensile strength by being cured while being foamed, a photocurable foam composition including bubbles of a gas in the photocurable composition, a urethane (meth)acrylate compound suitably used as a component of the photocurable composition and a method for manufacturing a foam using the photocurable composition.

PREFERRED MODE FOR CARRYING OUT THE INVENTION

<<Photocurable composition>>

A photocurable composition includes a urethane (meth)acrylate (A) and a photopolymerization initiator (C). The urethane (meth)acrylate (A) includes a urethane (meth)acrylate compound represented by a formula (A1) below:

$$(CH_2=CR^5-CO-O-R^4-O-CO-NH)_a-R^2-NH-CO-(O-R^1)_n-O-CO-NH-R^3-(NH-CO-O-R^4-O-CO-CR^5=CH_2)_b \quad (A1).$$

In the formula (A1), $R^1$ is an alkylene group having 2 or more and 4 or less carbon atoms, $R^2$ is a group in which isocyanate groups are removed from an a+1-valent aliphatic isocyanate compound, $R^3$ is a group in which isocyanate groups are removed from a b+1-valent aliphatic isocyanate compound, a and b are each independently 1 or 2, $R^4$ is an alkylene group having 1 or more and 8 or less carbon atoms, $R^5$ is a hydrogen atom or a methyl group, a molecular weight of a unit represented by $-(O-R^1)_n-O-$ in the formula (A1) is 3000 or more and 30000 or less and n is a repetition number of oxyalkylene groups represented by $-O-R^1-$.

The photocurable composition includes the urethane (meth)acrylate compound represented by the formula (A1) above, and thus it is possible to form a sealant of a foam having both satisfactory elongation and satisfactory tensile strength by curing the photocurable composition while foaming the photocurable composition.

Hence, the photocurable composition is suitably used for manufacturing a foam through mixing with a gas and photocuring.

The viscosity of the photocurable composition which is a viscosity measured by a BH type viscometer using a No. 7 rotor at 20°C at a rotation speed of 20 rpm is equal to or greater than 10000 mPa·s and equal to or less than 300000 mPa·s, more preferably equal to or greater than 20000 mPa·s and equal to or less than 250000 mPa·s and further preferably equal to or greater than 50000 mPa·s and equal to or less than 150000 mPa·s. When the viscosity of the photocurable composition is excessively high, it may be difficult to apply the photocurable composition at room temperature. When the viscosity of the photocurable composition is excessively low, if the photocurable composition is used to form beads, it may be difficult to hold the desired shape of the beads. A method for adjusting the viscosity of the photocurable composition is not particularly limited. The viscosity of the photocurable composition is typically adjusted by adjusting the viscosity of the urethane (meth)acrylate (A). The viscosity of the photocurable composition can be adjusted, for example, by mixing a low-viscosity monomer component with the photocurable composition or adjusting the amount of filler mixed.

The essential or optional components of the photocurable composition will be described below.

<Urethane (meth)acrylate (A)>

The photocurable composition includes the urethane (meth)acrylate (A) as a curable component. The urethane (meth)acrylate (A) includes, as an essential component, the urethane (meth)acrylate compound represented by the formula (A1) below:

$$(CH_2=CR^5-CO-O-R^4-O-CO-NH)_a-R^2-NH-CO-(O-R^1)_n-O-CO-NH-R^3-(NH-CO-O-R^4-O-CO-CR^5=CH_2)_b \quad (A1).$$

In the formula (A1), $R^1$ is an alkylene group having 2 or more and 4 or less carbon atoms, $R^2$ is a group in which isocyanate groups are removed from an a+1-valent aliphatic isocyanate compound, $R^3$ is a group in which isocyanate groups are removed from a b+1-valent aliphatic isocyanate compound, a and b are each independently 1 or 2, $R^4$ is an alkylene group having 1 or more and 8 or less carbon atoms, $R^5$ is a hydrogen atom or a methyl group, a molecular weight of a unit represented by $-(O-R^1)_n-O-$ in the formula (A1) is 3000 or more and 30000 or less and n is a repetition number of oxyalkylene groups represented by $-O-R^1-$.

The photocurable composition includes, as the urethane (meth)acrylate (A), the urethane (meth)acrylate compound represented by the formula (A1) above, and thus it is possible to form a sealant of a foam having both satisfactory elongation and satisfactory tensile strength by curing the photocurable composition while foaming the photocurable composition. As long as the object of the present invention is not interfered with, in addition to the urethane (meth)acrylate compound represented by the formula (A1) above, the photocurable composition may include a urethane (meth)acrylate compound having a structure which is not applicable to the formula (A1).

In the specification and claims of the present application, "(meth)acrylate" means both "acrylate" and "methacrylate", "(meth)acryloyl" means both "acryloyl" and "methacryloyl" and "(meth)acrylic acid" means both "acrylic acid" and "methacrylic acid".

In the formula (A1), $R^1$ is an alkylene group having 2 or more and 4 or less carbon atoms. As described above, in the formula (A1), the molecular weight of a unit represented by $-(O-R^1)_n-O-$ is 3000 or more and 30000 or less. Hence, the urethane (meth)acrylate compound represented by the formula (A1) includes a plurality of oxyalkylene groups represented by $-O-R^1-$. In other words, in the formula (A1), a plurality of $R^1$s are present. A plurality of $R^1$s in the formula (A1) may be only one type of alkylene group or two or more types of alkylene groups.

The unit represented by $-(O-R^1)_n-O-$ is typically introduced into the urethane (meth)acrylate compound represented by the formula (A1) using a polyoxyalkylene glycol represented by $H-(O-R^1)_n-OH$. Hence, the molecular weight of the polyoxyalkylene glycol is selected as necessary, and thus the molecular weight of the urethane (meth)acrylate compound represented by the formula (A1) can be adjusted.

In order to set the viscosity of the photocurable composition to a viscosity in the preferred range described above, the viscosity of the urethane (meth)acrylate (A) which is a viscosity measured by the BH type viscometer using the No. 7 rotor at 20°C at a rotation speed of 20 rpm is preferably equal to or greater than 30000 mPa·s and equal to or less than 300000 mPa·s, and more preferably equal to or greater than 35000 mPa·s and equal to or less than 200000 mPa·s. As a method for adjusting the viscosity of the urethane (meth)acrylate (A), a method for adjusting, as necessary, the molecular weight of a urethane (meth)acrylate compound contained in a urethane (meth)acrylate compound such as the urethane (meth)acrylate compound represented by the formula (A1) is mentioned.

Specific examples of $R^1$ in the formula (A1) include an ethane-1,2-diyl group (ethylene group), a propane-1,3-diyl group, a propane-1,2-diyl group and a butane-1,4-diyl group. Among them, since synthesis of the urethane (meth)acrylate compound represented by the formula (A1) is easy and it is easy to obtain the photocurable composition which provides a cured product exhibiting desired physical properties, one or more selected from the group consisting of the ethane-1,2-diyl group (ethylene group), the propane-1,3-diyl group and the propane-1,2-diyl group is preferable, and the propane-1,2-diyl group is more preferable. When the number of carbon atoms in $R^1$ is excessively small, the number of ether bonds included in the polyoxyalkylene structure is increased, and thus the water resistance of the cured product is impaired or the water absorption of the cured product is high, with the result that the sealing property when the cured product is used as a sealant tends to decrease. When the number of carbon atoms in $R^1$ is excessively large, the viscosity of the photocurable composition is high, with the result that processability such as coatability tends to decrease. Therefore, the number of carbon atoms in $R^1$ is most preferably 3.

In the formula (A1), $R^2$ is a group in which isocyanate groups are removed from an a+1-valent aliphatic isocyanate compound. $R^3$ is a group in which isocyanate groups are removed from a b+1-valent aliphatic isocyanate compound. a and b are each independently 1 or 2. In other words, $R^2$ and $R^3$ are respectively residues derived from divalent or trivalent aliphatic isocyanate compounds. The divalent or trivalent aliphatic isocyanate compounds which can provide $R^2$ and $R^3$ are not particularly limited as long as the object of the present invention is not interfered with. Preferred specific examples of the divalent or trivalent aliphatic isocyanate compound include: aliphatic diisocyanates such as 1,6-hexane diisocyanate (1,6-hexamethylene diisocyanate), an oligomer of 1,6-hexane diisocyanate, isophorone diisocyanate (3-isocyanatomethyl-3,5,5-trimethylcyclohexyl isocyanate), methylene bis(4-cyclohexyl isocyanate), 2,2,4-trimethylhexamethylene diisocyanate, 1,4-hexamethylene diisocyanate, bis(2-isocyanatoethyl) fumarate and lysine diisocyanate (hexanoic acid-2,6-diisocyanate); and aliphatic triisocyanates such as 1,6,11-undecane triisocyanate, 1,8-diisocyanate-4-isocyanatomethyloctane, 1,3,6-hexamethylene triisocyanate and bicycloheptane triisocyanate. Trimers of the diisocyanates described above are also preferable as the trivalent aliphatic isocyanate. Examples of the trimer include isocyanurate, adduct, burette and the like.

Among these aliphatic isocyanates, since it is easy to obtain the photocurable composition which provides a cured product exhibiting desired physical properties, 1,6-hexane diisocyanate (1,6-hexamethylene diisocyanate), an oligomer of 1,6-hexane diisocyanate and isophorone diisocyanate are preferable, and isophorone diisocyanate is more preferable. In particular, when isophorone diisocyanate is used, it is possible to lower the viscosity of the composition, it is possible to select a long-chain polyol and when the cured product is a foam, the cured product tends to have satisfactory elongation.

The polyoxyalkylene glycol represented by $H-(O-R^1)_n-OH$ is reacted with the divalent or trivalent aliphatic isocyanate described above according to a conventional method, and thus a polyisocyanate compound represented by a formula (A1-1) below is obtained. $R^1$, $R^2$, $R^3$, a, b and n in the formula (A1-1) are the same as those in the formula (A1).

$$(OCN)_a-R^2-NH-CO-(O-R^1)_n-O-CO-NH-R^3-(NCO)_b \qquad (A1-1)$$

The polyisocyanate compound represented by the formula (A1-1) is reacted with a hydroxyalkyl (meth)acrylate represented by a formula (A1-2) below, and thus the urethane (meth)acrylate compound represented by the formula (A1) is obtained. $R^4$ and $R^5$ in the formula (A1-2) are the same as those in the formula (A1).

$$HO-R^4-O-CO-CR^5=CH_2 \qquad (A1-2)$$

$R^4$ in the formula (A1) is an alkylene group having 1 or more and 8 or less carbon atoms. The alkylene group serving as $R^4$ may be a linear alkylene group or a branched alkylene group. The alkylene group serving as $R^4$ is preferably a linear alkylene group. Preferred specific examples of the alkylene group serving as $R^4$ include a methylene group, an ethane-1,2-diyl group (ethylene group), a propane-1,3-diyl group, a propane-1,2-diyl group, a butane-1,4-diyl group, a pentane-1,5-diyl group, a hexane-1,6-diyl group, a heptane-1,7-diyl group and an octane-1,8-diyl group. Among these groups, the ethane-1,2-diyl group (ethylene group) and the propane-1,3-diyl group are preferable, and the ethane-1,2-diyl group (ethylene group) is more preferable.

The hydroxyalkyl (meth)acrylate represented by the formula (A1-2) is reacted with the divalent or trivalent aliphatic isocyanate compounds which can provide $R^2$ and $R^3$, an isocyanate compound represented by a formula (A1-3) below and an isocyanate compound represented by a formula (A1-4) below are adjusted and the isocyanate compound represented by the formula (A1-3) and the isocyanate compound represented by the formula (A1-4) which are obtained are reacted with the polyoxyalkylene glycol represented by $H-(O-R^1)_n-OH$, with the result that it is also possible to obtain the urethane (meth)acrylate compound represented by the formula (A1). $R^2$, $R^3$, $R^4$, $R^5$, a and b in the formula (A1-3) and the formula (A1-4) are the same as those in the formula (A1).

$$(CH_2=CR^5-CO-O-R^4-O-CO-NH)_a-R^2-NCO \qquad (A1-3)$$

$$(CH_2=CR^5-CO-O-R^4-O-CO-NH)_b-R^3-NCO \qquad (A1-4)$$

$R^5$ in the formula (A1) is a hydrogen atom or a methyl group. $R^5$ is preferably a hydrogen atom in that the cured product of the photocurable composition has satisfactory flexibility such as low hardness and high elongation.

Since it is easy to form a cured product exhibiting desired physical properties using the photocurable composition, in the formula (A1) described above, a and b are each preferably 1. In particular, a and b are each preferably 1 in that the photocurable composition of a viscosity suitable for the application is easily obtained and the cured product of the photocurable composition has satisfactory flexibility such as low hardness and high elongation.

The ratio of the mass of the urethane (meth)acrylate compound represented by the formula (A1) to the mass of the urethane (meth)acrylate (A) is not particularly limited as long as the object of the present invention is not interfered with. Since it is easy to form a cured product exhibiting desired physical properties, the ratio of the mass of the urethane (meth)acrylate compound represented by the formula (A1) to the mass of the urethane (meth)acrylate (A) is preferably equal to or greater than 60% by mass, more preferably equal to or greater than 80% by mass, further preferably equal to or greater than 90% by mass and most preferably equal to or greater than 100% by mass.

When the urethane (meth)acrylate (A) includes a urethane (meth)acrylate compound other than the urethane (meth)acrylate compound represented by the formula (A1), the other urethane (meth)acrylate compound is not particularly limited as long as the object of the present invention is not interfered with. As the other urethane (meth)acrylate compound, for example, a urethane (meth)acrylate compound capable of being manufactured by the reaction of polyols such as a polyester polyol and a carbonate diol, a known polyisocyanate compound and the hydroxyalkyl (meth)acrylate represented by the formula (A1-2) can be used.

The ratio of the mass of the urethane (meth)acrylate (A) to the mass of the photocurable composition is preferably equal to or greater than 50% by mass and equal to or less than 95% by mass, more preferably equal to or greater than 60% by mass and equal to or less than 94% by mass and further preferably equal to or greater than 70% by mass and equal to or less than 93% by mass. When the ratio of the mass of the urethane (meth)acrylate (A) is in the range described above, a photocurable composition is easily obtained which provides a cured product having satisfactory flexibility and elongation and has a viscosity suitable for the application.

<Photopolymerizable monomer (B)>

The photocurable composition may include a photopolymerizable monomer (B) which is a compound having an ethylenically unsaturated double bond, and preferably includes the photopolymerizable monomer (B). The photopolymerizable monomer (B) is not particularly limited as long as a compound includes one or more ethylenically unsaturated double bonds and is not applicable to the urethane (meth)acrylate (A). As the photopolymerizable monomer (B), one compound may be used singly or two or more compounds may be combined to be used.

Examples of the preferred photopolymerizable monomer (B) include a (meth)acrylate compound which is not applicable to the urethane (meth)acrylate (A) and a compound, such as a (meth)acrylamide compound, which includes a (meth)acryloyl group. As the photopolymerizable monomer (B), the (meth)acrylate compound is preferable.

The number of (meth)acryloyl groups included in the photopolymerizable monomer (B) including the (meth)acryloyl group is not particularly limited. The number of (meth)acryloyl groups included in the photopolymerizable monomer (B) including the (meth)acryloyl group may be any one of 1, 2, 3 and 4 or more, and is preferably 1, 2 or 3. When the number of (meth)acryloyl groups included in the photopolymerizable monomer (B) is the number described above, a photocurable composition is easily obtained which has satisfactory photocurability and has a low viscosity suitable for the application.

For ease of availability and synthesis and ease of formation of a cured product exhibiting desired physical properties, the photopolymerizable monomer (B) is preferably one or more selected from the group consisting of a tri(meth)acrylate compound (B1), a di(meth)acrylate compound (B2) and a mono(meth)acrylate compound (B3).

Preferred specific examples of the tri(meth)acrylate compound (B3) includes trimethylolpropane tri(meth)acrylate, entaerythritol tri(meth)acrylate, tris((meth)acryloyloxyethyl)isocyanurate, tris(2-hydroxyethyl)isocyanurate tri(meth)acrylate, ethoxylated trimethylolpropane tri (meth)acrylate, propoxylated glycerol tri(meth)acrylate, propoxylated trimethylolpropane tri(meth)acrylate, propoxylated pentaerythritol tri(meth)acrylate and the like.

Preferred specific examples of the di(meth)acrylate compound (B2) includes: di(meth)acrylates of aliphatic glycols such as ethylene glycol di(meth)acrylate, 1,4-butanediol di(meth)acrylate, 2-methyl-1,3-propanediol di(meth)acrylate, neopentyl glycol di(meth)acrylate, 1,6-hexane diol di(meth)acrylate, 1,9-nonanediol di(meth)acrylate and 2-butyl-2-ethyl-1,3-propanediol di(meth)acrylate; di(meth)acrylates of oligo or polyalkylene glycols such as diethylene glycol di(meth)acrylate, dipropylene glycol di(meth)acrylate, tripropylene glycol di(meth)acrylate, polyethylene glycol di(meth)acrylate, polypropylene glycol di(meth)acrylate and polytetramethylene glycol di(meth)acrylate; di(meth)acrylates of ethoxylated aliphatic glycols such as ethoxylated dipropylene glycol di(meth)acrylate, ethoxylated 2-methyl-1,3-propanediol di(meth)acrylate, ethoxylated 1,6-hexanediol di(meth)acrylate and propoxylated neopentyl glycol di(meth)acrylate; ethoxylated bisphenol A di(meth)acrylate; isocyanurate di(meth)acrylate; and tricyclodecanedimethanol di(meth)acrylate.

Preferred specific examples of the mono(meth)acrylate compound (B3) includes: C1-C20 alkyl (meth)acrylates such as methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, isooctyl (meth)acrylate, n-nonyl (meth)acrylate, n-decyl (meth)acrylate, isodecyl (meth)acrylate, lauryl (meth)acrylate and stearyl (meth)acrylate; alicyclic (meth)acrylates such as menthyl (meth)acrylate, norbornyl (meth)acrylate, isobornyl (meth)acrylate, adamantyl (meth)acrylate, tricyclodecanyl (meth)acrylate, tetracyclodecanyl (meth)acrylate and cyclic trimethylolpropane formal (meth)acrylate; 2-hydroxyethyl (meth)acrylate; ethoxylated 2-hydroxyethyl (meth)acrylate; 2-phenoxyethyl (meth)acrylate; 2-(2-ethoxyethoxy) ethyl acrylate; benzyl (meth)acrylate; and phosphoric acid (2-(meth)acryloyloxyethyl).

The photopolymerizable monomer (B) is preferably at least one selected from the group consisting of a chain aliphatic tri(meth)acrylate (B1-1), a chain aliphatic di(meth)acrylate (B2-1), a chain aliphatic mono(meth)acrylate (B3-1) and an alicyclic mono(meth)acrylate (B3-2).

When the chain aliphatic tri(meth)acrylate (B1-1) is used, the surface curability of the photocurable composition and the heat resistance of the cured product are enhanced. Examples of the chain aliphatic tri(meth)acrylate (B1-1) include trimethylolpropane tri(meth)acrylate, pentaerythritol tri(meth)acrylate, ethoxylated trimethylolpropane tri(meth)acrylate, propoxylated glycerol tri(meth)acrylate, propoxylated trimethylolpropane tri(meth)acrylate, propoxylated pentaerythritol tri(meth)acrylate and the like.

Examples of the chain aliphatic di(meth)acrylate (B2-1) include: di(meth)acrylates of aliphatic glycols such as ethylene glycol di(meth)acrylate, 1,4-butanediol di(meth)acrylate, 2-methyl-1,3-propanediol di(meth)acrylate, neopentyl glycol di(meth)acrylate, 1,6-hexane diol di(meth)acrylate, 1,9-nonanediol di(meth)acrylate and 2-butyl-2-ethyl-1,3-propanediol di(meth)acrylate; di(meth)acrylates of oligo or polyalkylene glycols such as diethylene glycol di(meth)acrylate, dipropylene glycol di(meth)acrylate, tripropylene glycol di(meth)acrylate, polyethylene glycol di(meth)acrylate, polypropylene glycol di(meth)acrylate and polytetramethylene glycol di(meth)acrylate; di(meth)acrylates of ethoxylated aliphatic glycols such as ethoxylated dipropylene glycol di(meth)acrylate, ethoxylated 2-methyl-1,3-propanediol di(meth)acrylate, ethoxylated 1,6-hexanediol di(meth)acrylate and propoxylated neopentyl glycol di(meth)acrylate; ethoxylated bisphenol A di(meth)acrylate; isocyanurate di(meth)acrylate; and tricyclodecanedimethanol di(meth)acrylate.

Examples of the chain aliphatic mono(meth)acrylate (B3-1) include: C1-C20 alkyl (meth)acrylates such as methyl (meth)acrylate, ethyl (meth)acrylate, n-propyl (meth)acrylate, n-butyl (meth)acrylate, n-pentyl (meth)acrylate, n-hexyl (meth)acrylate, n-heptyl (meth)acrylate, isooctyl (meth)acrylate, n-nonyl (meth)acrylate, n-decyl (meth)acrylate, isodecyl (meth)acrylate, lauryl (meth)acrylate and stearyl (meth)acrylate; 2-hydroxyethyl (meth)acrylate; ethoxylated 2-hydroxyethyl (meth)acrylate; 2-phenoxyethyl (meth)acrylate; 2-(2-ethoxyethoxy) ethyl acrylate; and phosphoric acid (2-(meth)acryloyloxyethyl).

When the alicyclic mono(meth)acrylate (B3-2) is used, it is possible to lower the viscosity of the photocurable composition while improving the curability without lowering the flexibility (elongation) of the cured product. Examples of the alicyclic mono(meth)acrylate (B3-2) include: alicyclic (meth)acrylates such as menthyl (meth)acrylate, norbornyl (meth)acrylate, isobornyl (meth)acrylate, adamantyl (meth)acrylate, tricyclodecanyl (meth)acrylate, tetracyclodecanyl (meth)acrylate and cyclic trimethylolpropane formal (meth)acrylate and the like.

The ratio of the mass of the photopolymerizable monomer (B) to the mass of the photocurable composition is preferably equal to or greater than 1% by mass and equal to or less than 20% by mass, more preferably equal to or greater than 2% by mass and equal to or less than 18% by mass and further preferably equal to or greater than 5% by mass and equal to or less than 15% by mass. When the ratio of the mass of the photopolymerizable monomer (B) to the mass of the photocurable composition is in the range described above, a photocurable composition is easily obtained which has both satisfactory curability and a low viscosity, and a flexible cured product is easily formed.

<Photopolymerization initiator (C)>

The photocurable composition includes the photopolymerization initiator (C) as a component for reacting the urethane acrylate (A) with the photopolymerizable monomer (B) to cure the photocurable composition. The type of photopolymerization initiator (C) is not particularly limited as long as the object of the present invention is not interfered with. The photocurable composition may include one photopolymerization initiator (C) singly or may combine and include two or more photopolymerization initiators (C).

In order to achieve both the deep curability of the photocurable composition and the suppression of surface tack of the cured product, the photocurable composition preferably includes, as the photopolymerization initiator (C), at least one selected from the group consisting of an alkylphenone photopolymerization initiator, an acylphosphine oxide photopolymerization initiator and an oxime ester photopolymerization initiator.

Examples of the alkylphenone photopolymerization initiator include an $\alpha$-hydroxyalkylphenone compound, an $\alpha$-aminoalkylphenone compound, an $\alpha$-benzylketal compound and the like. The $\alpha$-hydroxyalkylphenone compound is a compound having an alkylphenone skeleton in which a hydroxy group is bonded at an $\alpha$-position relative to a carbonyl group. The $\alpha$-aminoalkylphenone compound is a compound having an alkylphenone skeleton in which an optionally substituted amino group is bonded at an $\alpha$-position relative to a carbonyl group.

Specific examples of the $\alpha$-hydroxyalkylphenone compound include: 1-hydroxycyclohexyl phenyl ketone (made by IGM Resins B.V., Omnirad 184); 2-hydroxy-2-methyl-1-phenylpropanone (made by IGM Resins B.V., Omnirad 1173); 1-[4-(2-hydroxyethoxy)-phenyl]-2-hydroxymethylpropanone (made by IGM Resins B.V., Omnirad 2959); 2-hydroxy-1-(4-(4-(2-hydroxypropionyl)benzyl)phenyl)-2-methylpropane-1-one (made by IGM Resins B.V., Omnirad 127); and the like. Specific examples of the $\alpha$-aminoalkylphenone compound include: 2-methyl-1-[4-(methylthio)phenyl]-2-morpholinopropane-1-one (made by IGM Resins B.V., Omnirad 907); 2-benzyl-2-(dimethylamino)-4'-morpholinobtyrophenone (made by IGM Resins B.V., Omnirad 369); and the like. Specific examples of the $\alpha$-benzylketal compound include: 2,2-dimethoxy-2-phenylacetophenone (made by IGM Resins B.V., Omnirad 651).

The acylphosphine oxide photopolymerization initiator is a pentavalent phosphorus compound which has a P=O bond and at least one acyl group bonded to the phosphorus atom of the P=O bond. As the acylphosphine oxide photopolymerization initiator, a pentavalent phosphorus compound which is conventionally used as a photopolymerization initiator and has a P=O bond and at least one acyl group bonded to the phosphorus atom of the P=O bond can be used without particular limitation.

Preferred specific examples of the acylphosphine oxide photopolymerization initiator include: 2,4,6-trimethylbenzoyl-diphenyl-phosphine oxide (made by IGM Resins B.V., Omnirad TPO-H); bis(2,4,6-trimethylbenzoyl)-phenylphosphine oxide (made by IGM Resins B.V., Omnirad 819); ethyl (2,4,6-trimethylbenzoyl) phenylphosphinate (made by IGM Resins B.V., Omnirad TPO-L); bis(2,6-dimethoxybenzoyl)-2,4,4-trimethyl-pentylphosphine oxide (made by Ciba, CGI403); and the like.

In addition to the alkylphenone photopolymerization initiator and the acylphosphine oxide photopolymerization initiator, photopolymerization initiators which can be suitably used include: benzoin photopolymerization initiators such as benzoin, benzoin methyl ether and benzoin ethyl ether; anthraquinone photopolymerization initiators such as 2-methylanthraquinone, 2-amylanthraquinone, 2-tert-butylanthraquinone and 1-chloroanthraquinone; thioxanthone photopolymerization initiators such as 2,4-dimethylthioxanthone, 2,4-diisopropylthioxanthone and 2-chlorothioxanthone; benzophenone photopolymerization initiators such as benzophenone, 4-(1-tert-butyldioxy-1-methylethyl)benzophenone and 3,3',4,4'-tetrakis(tert-butyldioxycarbonyl)benzophenone; phenylglyoxylate photopolymerization initiators such as alkylphenylglyoxylate; oxime ester photopolymerization initiators such as 1,2-octanedione, 1-[4-(phenylthio)phenyl]-, 2-(O-benzoyloxime) (made by BASF Japan, OXE01), ethanone, 1-[9-ethyl-6-(2-methylbenzoyl)-9H-carbazol-3-yl]-, 1-(O-acetyloxime) (made by BASF Japan, OXE02), OXE03 (made by BASF Japan) and OXE04 (made by BASF Japan); and titanocene compound photopolymerization initiators such as bis(5,2,4-cyclopentadien-1-yl)-bis(2,6-difluoro-3-(1H-pyrrol-1-yl)-phenyl)titanium.

The ratio of the mass of the photopolymerization initiator (C) to the mass of the photocurable composition is preferably equal to or greater than 0.01% by mass and equal to or less than 10% by mass, more preferably equal to or greater than 0.05% by mass and equal to or less than 5% by mass and further preferably equal to or greater than 0.1% by mass and equal to or less than 2% by mass.

<Wax (D)>

The photocurable composition preferably includes a wax (D) in that the surface tack of the cured product is suppressed. Since the effect of suppressing the tack is high, as the wax (D), a wax formed of a hydrocarbon having a melting point of 60°C or more and 75°C or less is preferable. Examples of the wax formed of the hydrocarbon having a melting point of 60°C or more and 75°C or less include a paraffin wax and a microcrystalline wax.

The ratio of the mass of the wax (D) to the mass of the photocurable composition is preferably equal to or greater than 0.1% by mass and equal to or less than 8% by mass, more preferably equal to or greater than 0.5% by mass and equal to or less than 5% by mass and further preferably equal to or greater than 1% by mass and equal to or less than 3% by mass.

<Other components>

As long as the object of the present invention is not interfered with, the photocurable composition may or may not include, as other components, various additives which are conventionally mixed with a photocurable composition. Examples of the other components include a polythiol compound, a carbodiimide compound, a viscosity modifier, a sensitizer, a thickener, a polymerization inhibitor, a pigment, an adhesion improver, an antioxidant, a curing accelerator, a filler, a foam stabilizer, a plasticizer, a surfactant, a lubricant, an antistatic agent and the like. The amounts of the other components used are determined as necessary with consideration given to the amounts of other components which are normally used.

As will be described later, the photocurable composition is preferably used for adjusting a photocurable foaming agent which includes bubbles of a gas. Hence, the photocurable composition preferably includes a foam stabilizer. As the foam stabilizer, a silicone foam stabilizer is preferable because it has a satisfactory foam-stabilizing effect on the photocurable composition. As the silicone foam stabilizer, a polyorganosiloxane having a siloxane structure and an ester structure or a polyorganosiloxane having a siloxane structure and an ether structure is preferable. The polyorganosiloxane which is preferable as the foam stabilizer may have two or more ester structures per molecule or may have two or more ether structures per molecule. As the ester structure, an aliphatic polyester structure is preferable. As the ether structure, a polyoxyalkylene structure is preferable. The structure of the polyorganosiloxane may have a chain structure or may have a structure including a cyclic structure. The structure of the polyorganosiloxane may be a combination of one or more chain structures and one or more cyclic structures or may be a structure in which one or more cyclic polyorganosiloxanes are linked by siloxane bonds (Si-O-Si). Regarding the molecular weight of the silicone foam stabilizer, the silicone foam stabilizer preferably includes, as a main component, polyorganosiloxane which has a number average molecular weight equal to or greater than 800 and equal to or less than 3000 and preferably equal to or greater than 1000 or equal to or less than 2000. The silicone foam stabilizer preferably includes, together with the main component described above, high molecular weight polyorganosiloxane which has a number average molecular weight equal to or greater than 5000 and equal to or less than 20000.

The photocurable composition can be manufactured by uniformly mixing the desired amounts of components described above with a well-known mixer.

<<Photocurable foam composition>>

As described above, the photocurable composition described above is suitably used for mixing it with a gas and then curing it to form a foam. Hence, the photocurable composition and the photocurable foam composition including bubbles (E) of a gas dispersed in the photocurable composition are preferably used for forming a foam. A method for manufacturing the photocurable foam composition will be described later as a method for manufacturing a foam.

In terms of suppressing the inhibition of curing caused by oxygen in the photocurable composition, as the gas included in the photocurable foam composition, an inert gas is preferable. As the inert gas, one or more selected from the group consisting of nitrogen, argon, xenon, krypton and carbon dioxide are preferable.

The content of the bubbles (E) in the photocurable foam composition is not particularly limited, and is determined as necessary according to a foaming magnification for a foam obtained by curing the photocurable foam composition. The foaming magnification is, for example, preferably equal to or greater than 1.5 times and equal to or less than 5 times, and more preferably equal to or greater than 2.5 times and equal to or less than 4 times. The foaming magnification is defined by a formula below.

```
foaming magnification A = V1 / V0
```

V1: volume per unit mass of the photocurable foam composition under atmospheric pressure
V0: volume per unit mass of the photocurable composition under atmospheric pressure.

The size of each of the bubbles (E) in the photocurable composition is measured as the size of each of the bubbles (E) in the cured product of the photocurable composition which has been cured under atmospheric pressure. Typically, the photocurable composition is discharged from a nozzle under an atmospheric pressure atmosphere to form beads, thereafter a cured product obtained by exposing and curing the formed beads is used and thus the size of each of the bubbles (E) is measured. The size of each of the bubbles (E) of the gas is not particularly limited as long as the object of the present invention is not interfered with. The size of each of the bubbles (E) of the gas is, for example, preferably equal to or greater than 5 um and equal to or less than 200 $\mu$m, and more preferably equal to or greater than 20 um and equal to or less than 100 um. The size of each of the bubbles of the gas can be adjusted by adjusting the strength of a shear force applied to the mixture of the photocurable composition and the gas, the amount of gas mixed with the photocurable composition, a pressure applied to the photocurable composition within the nozzle before the photocurable composition is discharged from the nozzle when the cured product is formed and the like. The magnitude of the shear force can be adjusted by adjusting the cross-sectional area of a flow path for transferring the mixture, the velocity of flow of the mixture in the flow path and the like. The size of each of the bubbles (E) of the gas can be measured by observing, with a microscope, the cross section of the cured product of the photocurable composition which has been cured under atmospheric pressure.

<<Method for manufacturing foam>>

A method for manufacturing a foam is not particularly limited as long as the photocurable composition described above is used. Typically, the foam can be manufactured by a method which includes: mixing the photocurable composition with a gas to generate a photocurable foam composition including bubbles; and
exposing the photocurable foam composition to photocure the photocurable foam composition. Preferred specific examples of the method described above include a method disclosed in Patent No. 3482309. The method for manufacturing the foam will be described in detail below.

In the typical method for manufacturing the foam described above, the generating of the photocurable foam composition includes:

a first step of supplying the photocurable composition which is pressure fed in a first conduit and the gas which is pressure fed via a second conduit using a first pump, and mixing the photocurable composition and the gas to generate a mixture;
a second step of dispersing the gas into the photocurable composition in a dispersion conduit in a state where the mixture is pressurized; and
a third step of foaming the mixture by discharging the mixture which has passed through the dispersion conduit so as to generate the photocurable foam composition, and this method is preferably performed.

Preferably, in the first step, a piston pump which is connected to the first conduit and the second conduit is used as the first pump. First, the movement of the piston of the piston pump creates a vacuum in a space within the cylinder storing the piston. The compressed gas is filled from the second conduit into the space within the cylinder under the vacuum. Although the pressure of the gas at this time is not particularly limited, for example, the pressure is preferably equal to or greater than 0.05 MPa and equal to or less than 0.3 MPa and more preferably equal to or greater than 0.1 MPa and equal to or less than 0.2 MPa. Then, the photocurable composition is supplied by the first conduit to generate, within the cylinder, the mixture in which the photocurable composition and the gas are mixed. The pressure of the mixture generated within the cylinder is not particularly limited. For example, the pressure of the mixture generated within the cylinder is preferably equal to or greater than 5 MPa and equal to or less than 25 MPa and more preferably equal to or greater than 15 MPa and equal to or less than 20 MPa.

In the second step, the mixture generated in the first step as described above is pushed out into the dispersion conduit connected to the cylinder by the movement of the cylinder. At that time, a shear force is applied to the mixture within the dispersion conduit, and thus the dispersion of the bubbles of the gas into the photocurable composition progresses.

Then, in the third step, the mixture which has passed through the dispersion conduit is discharged. The mixture is generally discharged from a nozzle connected to the dispersion conduit. For example, a pressure applied to the mixture within the nozzle is preferably equal to or greater than 5 MPa and equal to or less than 20 MPa and more preferably equal to or greater than 8 MPa and equal to or less than 15 MPa. The mixture pressurized in this way is discharged under an atmospheric pressure environment, and thus the bubbles compressed in the mixture are expanded, with the result that the photocurable foam composition is generated. The pressurized mixture from the nozzle is typically discharged such that beads made of the photocurable foam composition are formed in an area to which a sealant of the foam is applied.

The photocurable foam composition formed in this way is exposed to form the cured foam. The type of light source used in the exposure is not particularly limited, and is selected as necessary with consideration given to the absorption wavelength of the photopolymerization initiator (C) and the like. As the light source used in the exposure, an LED is preferable in terms of various advantages such as a long life of the light source, energy saving, space saving, output stability and low maintenance cost.

The oxygen concentration on the surface of the photocurable foam composition when the photocurable foam composition is exposed is preferably equal to or less than 3% by volume. In this case, the inhibition of curing caused by oxygen in the surface of the photocurable foam composition is suppressed, and the tack of the foam which is formed is easily suppressed.

The oxygen concentration on the surface of the photocurable foam composition when the photocurable foam composition is exposed is measured, for example, by the following method. First, the gas in a space 1 cm to 3 cm away from the surface of the photocurable foam composition immediately before or at the start of the exposure is sampled. Then, the concentration of the sampled gas is measured using an oxygen detector tube or an oxygen concentration measuring device. For the measurement of the oxygen concentration, a detector tube 31B made by GASTEC CORPORATION, a digital oxygen concentration meter made by NEW COSMOS ELECTRIC CO.,LTD., an oxygen concentration meter made by Iijima Electronics Corp. or the like can be used.

A method for setting the oxygen concentration on the surface of the photocurable foam composition to equal to or less than 3% by volume when the photocurable foam composition is exposed is not particularly limited. For example, a gas other than oxygen may be sprayed to the surface of the photocurable foam composition so as to lower the oxygen concentration on the surface of the photocurable foam composition. Alternatively, when the photocurable foam composition is generated, a gas other than oxygen may be discharged from the photocurable foam composition to lower the oxygen concentration on the surface of the photocurable foam composition. As the gas other than oxygen, an inert gas such as nitrogen, argon, xenon, krypton or carbon dioxide is preferably used.

Among (I) the generating of the photocurable foam composition, (II) setting the oxygen concentration on the surface of the photocurable foam composition to equal to or less than 3% by volume and (III) the curing of the photocurable foam composition by the exposing, (I) and (III) or all (I) to (III) are preferably achieved with one or a plurality of manipulators simultaneously or continuously.

When the operations of (I) to (III) are continuously performed, for example, the interval between the operations is preferably equal to or less than 1 minute, more preferably equal to or less than 30 seconds, further preferably equal to or less than 10 seconds and particularly preferably equal to or less than 5 seconds.

For example, a single manipulator including a nozzle which discharges the mixture for generating the photocurable foam composition and a light source for exposing the photocurable foam composition is used, and thus (I) and (III) can be performed simultaneously or continuously. Even when a manipulator including a nozzle which discharges the mixture for generating the photocurable foam composition and a manipulator including a light source for exposing the photocurable foam composition are used, (I) and (III) can be performed simultaneously or continuously.

A single manipulator including: a nozzle which discharges the mixture for generating the photocurable foam composition; a gas supply device which supplies a gas other than oxygen to the surface of the photocurable foam composition; and a light source for exposing the photocurable foam composition is used, and thus (I) to (III) can be performed simultaneously or continuously.

Even when a method using a combination of a manipulator capable of performing (I) and (II) and a manipulator capable of performing (III), a method using a combination of a manipulator capable of performing (I) and (III) and a manipulator capable of performing (II), a method using a combination of a manipulator capable of performing (II) and (III) and a manipulator capable of performing (I) or a method using a combination of a manipulator capable of performing (I), a manipulator capable of performing (II) and a manipulator capable of performing (III) is used, (I) to (III) can be performed simultaneously or continuously.

When (I) and (III) are performed with a manipulator, (II) the setting of the oxygen concentration on the surface of the photocurable foam composition to equal to or less than 3% by volume may be performed with the manipulator or may be performed with another means without use of the manipulator. For example, it is possible to enclose the vicinity of a position to which the photocurable foam composition discharged from the manipulator is exposed, to supply an inert gas to the enclosed space and to reduce the oxygen concentration.

EXAMPLES

Although the present invention will be further specifically described below using Examples, the scope of the present invention is not limited to these Examples.

[Examples 1 to 7, Comparative Example 1, and Comparative Example 2]

In Examples 1 to 7, Comparative Example 1 and Comparative Example 2, the following PO1 to PO6 were used as glycols or triols.

PO1: polypropylene glycol (molecular weight of 2000, number of hydroxyl groups of 2)
PO2: polypropylene glycol (molecular weight of 3000, number of hydroxyl groups of 2)
PO3: polypropylene triol (molecular weight of 5100, number of hydroxyl groups of 3, branched triol obtained by adding propylene oxide to glycerin)
PO4: polypropylene glycol (molecular weight of 10000, number of hydroxyl groups of 2)
PO5: polypropylene glycol (molecular weight of 15000, number of hydroxyl groups of 2)
PO6: polypropylene glycol (molecular weight of 8000, number of hydroxyl groups of 2)

In Examples 1 to 7, Comparative Example 1 and Comparative Example 2, the following I1 or I2 was used as polyisocyanate. I1: hexamethylene diisocyanate oligomer (number of isocyanate functional groups of 2, NCO content of 17.2% by mass, Duranate A201H made by Asahi Kasei Corporation)
I2: isophorone diisocyanate
In Examples 1 to 7, Comparative Example 1 and Comparative Example 2, 2-hydroxyethyl acrylate (HEA) was used as hydroxyalkyl (meth)acrylate.
In Examples 1 to 7, Comparative Example 1 and Comparative Example 2, the following CA1 or CA2 was used as a catalyst.

CA1: tin octoate
CA2: dibutyl tin laurate

Using raw materials in the amounts shown in Table 1, urethane (meth)acrylate compounds for Examples and Comparative examples were synthesized according to the following method. Table 1 shows the viscosities of the obtained urethane (meth)acrylate compounds and the molecular weight of a polyoxyalkylene unit in the urethane (meth)acrylate compounds. The viscosities were measured by a BH type viscometer using a No. 7 rotor at 20°C at a rotation speed of 20 rpm.
Specifically, nitrogen was first caused to flow into a reaction vessel to eliminate water in the vessel. Thereafter, the dehydrated HEA was fed into the reaction vessel, and polyisocyanate was further fed thereinto. Then, the contents of the reaction vessel were stirred. Half of a catalyst was fed into the reaction vessel to start the reaction, and the reaction was carried out by stirring the contents of the reaction vessel for 2 hours at room temperature (the reaction started at about 20°C). After confirming that the residual amount of isocyanate group was a predetermined amount, a polyol was further added and then the contents of the reaction vessel were stirred while being heated to 80°C. When the temperature within the reaction vessel reached 80°C, the half of the catalyst was added, and the contents of the reaction vessel were stirred for 6 hours to carry out the reaction, with the result that the urethane (meth)acrylate compound was obtained.

[Table 1]

| | | Example | | | | | | | Comparative Example | |
|---|---|---|---|---|---|---|---|---|---|---|
| | | 1 | 2 | 3 | 4 | 5 | 6 | 7 | 1 | 2 |
| Glycol or triol (Parts by mass) | PO1 | - | - | - | - | - | - | - | 58.80 | 74.70 |
| | PO2 | 66.02 | 54.39 | 33.85 | 4.99 | - | - | - | - | - |
| | PO3 | 2.31 | - | - | - | - | - | - | 4.20 | - |
| | PO4 | - | 32.63 | 56.43 | 89.87 | 95.66 | - | - | - | - |
| | PO5 | - | - | - | - | - | 93.61 | - | - | - |
| | PO6 | - | - | - | - | - | - | 92.21 | - | - |
| Polyisocyanate (Parts by mass) | I1 | 21.17 | - | - | - | - | - | - | 29.90 | - |
| | I2 | - | 8.51 | 6.36 | 3.37 | 2.84 | 4.19 | 5.12 | - | 16.60 |
| HEA (Parts by mass) | | 5.54 | 4.45 | 3.34 | 1.77 | 1.49 | 2.19 | 2.66 | 7.10 | 8.70 |
| Catalyst (Parts by mass) | CA1 | 0.01 | - | - | - | - | - | - | - | - |
| | CA2 | - | 0.01 | 0.01 | 0.01 | 0.01 | 0.01 | 0.01 | 0.01 | 0.01 |
| Viscosity (mPa·s) | | 40000 | 60000 | 85000 | 90000 | 143000 | 100000 | 95000 | 40000 | 35000 |
| Molecular weight of polyoxyalkylene unit | | 10000 | 10000 | 10000 | 10000 | 15000 | 10000 | 8000 | 2000 | 2000 |

[Examples 8 to 23, and Comparative Examples 3 to 5]

In Examples 8 to 23 and Comparative Examples 3 to 5, the urethane (meth)acrylate compounds obtained in Examples 1 to 7, Comparative Example 1 and Comparative Example 2 were used as urethane (meth)acrylates (A).

In Examples 8 to 23 and Comparative Examples 3 to 5, the following M1 to M5 were used as photopolymerizable monomers (B) .

M1: isobornyl acrylate
M2: trimethylolpropane triacrylate
M3: polytetramethylene glycol diacrylate
M4: 1,9-nonanediol diacrylate
M5: lauryl acrylate

In Examples 8 to 23 and Comparative Examples 3 to 5, the following PI1 to PI3 were used.

PI1: 2,4,6-trimethylbenzoyl-diphenyl-phosphine oxide (made by IGM Resins B.V., Omnirad TPO-H)
PI2: 1-hydroxycyclohexyl phenyl ketone (made by IGM Resins B.V., Omnirad 184)
PI3: 1,2-octanedione, 1-[4-(phenylthio)phenyl]-, 2-(O-benzoyloxime) (made by BASF Japan, OXE01)

The types and amounts of urethane (meth)acrylates (A), photopolymerizable monomers (B) and photopolymerization initiators (C) shown in Tables 2 to 4 and 1.4 parts by mass of a foam stabilizer (0.7 parts by mass of SP-8427 and 0.7 parts by mass of SZ-1923 both of which were made by the Dow Chemical Company) were uniformly mixed using a planetary mixer, with the result that the photocurable compositions of Examples 8 to 23 and Comparative Examples 3 to 5 were obtained.

The viscosities of the photocurable compositions obtained were measured. The viscosities were measured by the BH type viscometer using the No. 7 rotor at 20°C at a rotation speed of 20 rpm. Asker C hardness, elongation, M50 (tensile stress at 50% elongation), M100 (tensile stress at 100% elongation) and Tb (stress at break) of the cured products serving as foams were measured according to the following methods. Furthermore, the heat resistance, the deep curability and the surface tack ($N_2$ spraying) of the photocurable compositions were evaluated according to the following methods. The results of these evaluations and measurements are shown in Tables 2 to 4.

<Measurement of Asker C hardness>

A cylindrical polypropylene cup with a circular opening of 50 mm inside diameter (diameter), an inside depth of 12 mm and one bottom closed was filled with a photocurable foam composition using a mechanical foaming device (FOAMPLY-ST (made by Sunstar Engineering Inc.)). The photocurable foam composition was prepared by adjusting a supply gas pressure using the mechanical foaming device described above such that the foaming magnification was 4 times. The photocurable foam composition filled in the cup was then exposed for 2 seconds from a distance of 10 mm away from the surface of the photocurable foam composition using an exposure device (firejet 240 (wavelength of 395 nm, made by Phoseon Technology) with an LED at an output of 12 W/cm$^2$, with the result that the photocured foam was formed. After the photocured foam was left at room temperature for 24 hours, the hardness of the foam was measured using an Asker C hardness tester according to JIS K 6253 (ASTM D2240).

<Measurements of M50, M100 and Tb>

While the photocurable foam composition was being discharged from the nozzle of the mechanical foaming device onto a Teflon (registered trademark) sheet at a discharge rate of 30 cc/minute, the nozzle was moved at a robot speed of 100 mm/second, with the result that strip-shaped beads of the photocurable foam composition having a semicircular cross section with a radius of 4 mm were formed. The photocurable foam composition was prepared by adjusting the supply gas pressure using the mechanical foaming device described above such that the foaming magnification was 4 times. The strip-shaped beads were was then exposed from a distance of 15 mm away from the strip-shaped beads using the exposure device (firejet240 (wavelength of 395 nm, made by Phoseon Technology) with an LED at an output of 12 W/cm$^2$ while a manipulator was being moved at a speed of 50 mm/second, with the result that the photocured strip-shaped foam was formed. While $N_2$ gas was being sprayed toward the forward direction of movement of the nozzle at a flow rate of 20L/second, the strip-shaped beads were was exposed. Using the resulting strip-shaped foam as a test piece, M50, M100 and Tb were measured according to JIS K 6251 (ASTM D412) under conditions of a test speed of 200 mm/minute and a distance between chucks of 20 mm.

<Heat resistance evaluation>

The cured product of the strip-shaped beads formed by the same method as in the measurements of M50, M100 and Tb was placed in an atmosphere of 140°C for 24 hours. The appearance of the cured product of the beads after 24 hours was observed, and the heat resistance was evaluated according to the following criteria.

Very good: no change in appearance
Good: no change in appearance but stickiness was observed on surface
Satisfactory: ends of cured product melted
Poor: cured product melted

<Deep curability evaluation>

The curable composition was filled in a cup with a circular opening having a side surface formed of aluminum, a bottom surface formed of glass, a diameter of 15 mm and a depth of 23 mm. The curable composition filled in the cup was exposed from a height of 10 mm away from the curable composition using the exposure device (firejet240 (wavelength of 395 nm, made by Phoseon Technology) with an LED at an output of 12 W/cm$^2$ while a manipulator was being moved at a speed of 150 mm/second, and thereafter the cured depth from a position on the opening side of the cup was measured with a scale.

<Surface tack evaluation>

A cylindrical polypropylene cup with a circular opening of 50 mm inside diameter (diameter), an inside depth of 12 mm and one bottom closed was filled with the photocurable composition. The photocurable foam composition filled in the cup was then exposed from a height of 10 mm away from the photocurable foam composition using the exposure device (firejet240 (wavelength of 395 nm, made by Phoseon Technology) with an LED at an output of 12 W/cm$^2$ while a manipulator was being moved at a speed of 150 mm/second, with the result that the cured product of the photocurable composition was formed. A test in which the photocurable composition in the cup was exposed while $N_2$ gas was being sprayed at a flow rate of 20L/second and a test in which the photocurable composition in the cup was exposed without $N_2$ gas being sprayed were carried out. The surface tack was evaluated according to the following criteria by touching the surface of the cured product with a finger and visually observing the cured product after touching with the finger.

Very good: no sticky feeling when touched
Good: sticky feeling was produced but no fingerprint was adhered
Satisfactory: fingerprint was adhered on surface
Poor: liquid was adhered

[Table 2]

| | | Example | | | | | | |
|---|---|---|---|---|---|---|---|---|
| | | 8 | 9 | 10 | 11 | 12 | 13 | 14 |
| Urethane (meth) acrylate (A) | Type | Ex. 5 | Ex. 5 | Ex. 5 | Ex. 5 | Ex. 5 | Ex. 5 | Ex 5 |
| | Parts by mass | 97.6 | 88.0 | 88.0 | 88.0 | 88.0 | 88.0 | 91.0 |
| Photopolymerizable monomer (B) | Type | - | M2 | M2 | M2 | M2 | M2 | M2 |
| | Parts by mass | - | 9.6 | 9.6 | 9.6 | 9.6 | 9.6 | 9.6 |
| Photopolymerization initiator (C) | Type | PI1/PI2 | PI1/PI2 | PI2 | PI2 | PI1 | PI3 | PI3 |
| | Parts by mass | 0.5/0.5 | 0.5/0.5 | 1.0 | 0.5 | 0.5/0.5 | 0.5 | 1 |
| Viscosity (mPa·s) | | 130000 | 60000 | 60000 | 60000 | 60000 | 60000 | 50000 |
| Asker C hardness | | 15 | 20 | 20 | 20 | 20 | 20 | 20 |
| Elongation (%) | | 120 | 100 | 100 | 100 | 100 | 100 | 100 |
| M50 (kPa) | | 350 | 400 | 400 | 400 | 400 | 400 | 400 |
| M100 (kPa) | | 800 | 950 | 950 | 950 | 950 | 950 | 950 |
| Tb (kPa) | | 950 | 950 | 950 | 950 | 950 | 950 | 950 |
| Heat resistance (140°C for 24 hours) | | Poor | Very good | Very good | Very good | Very good | Very good | Very good |
| Deep curability | | 12 mm | 12 mm | > 23 mm | > 23 mm | 12 mm | 17 mm | 6 mm |
| Surface tack (Without $N_2$ spraying) | | Satisfactory | Satisfactory | Poor | Satisfactory | Satisfactory | Satisfactory | Good |
| Surface tack (With N2 spraying) | | Very good | Good | Good | Good | Very good | Very good | Very good |

EP 4 317 230 A1

[Table 3]

| | | Example | | | | | | |
|---|---|---|---|---|---|---|---|---|
| | | 15 | 16 | 17 | 18 | 19 | 20 | 21 |
| Urethane (meth) acrylate (A) | Type | Ex. 5 | Ex. 5 | Ex. 5 | Ex. 1 | Ex. 2 | Ex. 2 | Ex. 3 |
| | Parts by mass | 91.0 | 91.0 | 91.0 | 88.0 | 88.0 | 88.0 | 88.0 |
| Photopolymerizable monomer (B) | Type | M3 | M4 | M5 | M1 | M2 | M2 | M2 |
| | Parts by mass | 6.6 | 6.6 | 6.6 | 9.6 | 9.6 | 9.6 | 9.6 |
| Photopolymerization initiator (C) | Type | PI1/PI2 | PI1/PI2 | PI1/PI2 | PI1/PI2 | PI1/PI2 | PI2 | PI2 |
| | Parts by mass | 1 | 1 | 1 | 1 | 1 | 1 | 1 |
| Viscosity (mPa·s) | | 50000 | 50000 | 50000 | 80000 | 40000 | 45000 | 50000 |
| Asker C hardness | | 15 | 15 | 14 | 14 | 28 | 26 | 25 |
| Elongation (%) | | 120 | 120 | 120 | 120 | 90 | 100 | 100 |
| M50 (kPa) | | 350 | 400 | 350 | 4050 | 650 | 550 | 450 |
| M100 (kPa) | | 900 | 950 | 950 | 950 | - | 1000 | 950 |
| Tb (kPa) | | 1000 | 1050 | 1050 | 1050 | 1150 | 1000 | 950 |
| Heat resistance (140°C for 24 hours) | | Good | Good | Satisfactory | Very good | Very good | Very good | Very good |
| Deep curability | | >23mm | >23mm | >23mm | >23mm | >23mm | >23mm | >23mm |
| Surface tack (Without $N_2$ spraying) | | Satisfactory | Satisfactory | Satisfactory | Satisfactory | Satisfactory | Satisfactory | Satisfactory |
| Surface tack (With N2 spraying) | | Very good | Very good | Good | Very good | Very good | Very good | Very good |

[Table 4]

| | | Examples | | | Comparative Examples | | |
|---|---|---|---|---|---|---|---|
| | | 22 | 23 | 24 | 3 | 4 | 5 |
| Urethane (meth) acrylate (A) | Type | Ex. 4 | Ex. 6 | Ex. 7 | Comp. Ex. 1 | Comp. Ex. 2 | Comp. Ex. 2 |
| | Parts by mass | 88.0 | 88.0 | 88.0 | 91.0 | 91.0 | 97.6 |
| Photo-polymerizable monomer (B) | Type | M2 | M2 | M2 | M2 | M2 | - |
| | Parts by mass | 9.6 | 9.6 | 9.6 | 6.6 | 6.6 | - |
| Photopolymerization initiator (C) | Type | PI2 | PI2 | PI2 | PI2 | PI2 | PI2 |
| | Parts by mass | 1 | 1 | 1 | 1 | 1 | 1 |
| Viscosity (mPa·s) | | 55000 | 60000 | 55000 | 30000 | 30000 | 40000 |
| Asker C hardness | | 22 | 22 | 25 | 32 | 35 | 30 |
| Elongation (%) | | 120 | 100 | 100 | 60 | 60 | 80 |
| M50 (kPa) | | 350 | 450 | 500 | 850 | 800 | 700 |
| M100(kPa) | | 800 | 950 | 950 | - | - | 900 |
| Tb (kPa) | | 1000 | 950 | 950 | 900 | 800 | 900 |
| Heat resistance (140°C for 24 hours) | | Very good | Very good | Very good | Very good | Very good | Poor |
| Deep curability | | > 23 mm | > 23 mm | > 23 mm | > 23 mm | > 23 mm | > 23 mm |
| Surface tack (Without $N_2$ spraying) | | Satisfactory | Satisfactory | Satisfactory | Satisfactory | Satisfactory | Satisfactory |
| Surface tack (With N2 spraying) | | Very good | Very good | Very good | Very good | Very good | Very good |

It is found from tables 2 to 4 that the urethane (meth)acrylate compound represented by the formula (A1) satisfying the configuration requirements described above and the photocurable composition including the photopolymerization initiator (C) are cured while being foamed, and thus it is possible to form a foam which has both satisfactory elongation and satisfactory tensile strength.

**Claims**

1. A photocurable composition comprising: a urethane (meth)acrylate (A); and a photopolymerization initiator (C), wherein the urethane (meth)acrylate (A) comprises a urethane (meth)acrylate compound represented by a formula (A1) below:

$$(CH_2=CR^5-CO-O-R^4-O-CO-NH)_a-R^2-NH-CO-(O-R^1)_n-O-CO-NH-R^3-(NH-CO-O-\quad R^4-O-CO-CR^5=CH_2)_b \quad (A1)$$

wherein, in the formula (A1), $R^1$ is an alkylene group having 2 or more and 4 or less carbon atoms, $R^2$ is a group in which isocyanate groups are removed from an a+1-valent aliphatic isocyanate compound, $R^3$ is a group in which isocyanate groups are removed from a b+1-valent aliphatic isocyanate compound, a and b are each independently 1 or 2, $R^4$ is an alkylene group having 1 or more and 8 or less carbon atoms, $R^3$ is a hydrogen atom or a methyl group, a molecular weight of a unit represented by $-(O-R^1)_n-O-$ in the formula (A1) is 3000 or more and 30000 or less and n is a repetition number of oxyalkylene groups represented by $-O-R^1-$.

2. The photocurable composition according to claim 1, wherein a and b are each 1.

3. The photocurable composition according to claim 1 or 2, wherein a ratio of a mass of the urethane (meth)acrylate compound represented by the formula (A1) to a mass of the urethane (meth)acrylate (A) is equal to or greater than 60% by mass.

4. The photocurable composition according to claim 3, wherein $R^1$ is a propane-1,2-diyl group.

5. The photocurable composition according to any one of claims 1 to 4 further comprising: a photopolymerizable monomer (B), wherein the photopolymerizable monomer (B) is one or more selected from the group consisting of a tri(meth)acrylate (B1), a di(meth)acrylate (B2) and a mono(meth)acrylate (B3).

6. The photocurable composition according to any one of claims 1 to 5, wherein the photopolymerizable monomer (B) is at least one selected from the group consisting of a chain aliphatic tri(meth)acrylate (B1-1), a chain aliphatic di(meth)acrylate (B2-1), a chain aliphatic mono(meth)acrylate (B3-1) and an alicyclic mono(meth)acrylate (B3-2).

7. The photocurable composition according to any one of claims 1 to 6, wherein the photopolymerization initiator (C) comprises at least one selected from the group consisting of an alkylphenone photopolymerization initiator, an acylphosphine oxide photopolymerization initiator and an oxime ester photopolymerization initiator.

8. The photocurable composition according to any one of claims 1 to 8, wherein the photocurable composition is used for manufacturing a foam through mixing with a gas and photocuring.

9. A photocurable foam composition comprising: the photocurable composition according to any one of claims 1 to 8; and bubbles (E) of a gas dispersed in the photocurable composition.

10. The photocurable foam composition according to claim 9, wherein the gas is one or more selected from a group consisting of nitrogen, argon, xenon, krypton and carbon dioxide.

11. The photocurable foam composition according to claim 9 or 10, wherein a size of each of the bubbles (E) of the gas in a cured material which has been cured under atmospheric pressure is equal to or greater than 5 um and equal to or less than 200 $\mu$m.

12. A urethane (meth)acrylate compound represented by a formula (A1) below:

$$(CH_2=CR^5-CO-O-R^4-O-CO-NH)_a-R^2-NH-CO-(O-R^1)_n-O-CO-NH-R^3-(NH-CO-O-\quad R^4-O-CO-$$

$CR^5=CH_2)_b$        (A1)

wherein, in the formula (A1), $R^1$ is an alkylene group having 2 or more and 4 or less carbon atoms, $R^2$ is a group in which isocyanate groups are removed from an a+1-valent aliphatic isocyanate compound, $R^3$ is a group in which isocyanate groups are removed from a b+1-valent aliphatic isocyanate compound, a and b are each independently 1 or 2, $R^4$ is an alkylene group having 1 or more and 8 or less carbon atoms, $R^3$ is a hydrogen atom or a methyl group, a molecular weight of a unit represented by $-(O-R^4)_n-O-$ in the formula (A1) is 3000 or more and 30000 or less and n is a repetition number of oxyalkylene groups represented by $-O-R^1-$.

13. A method for manufacturing a foam, the method comprising:

mixing the photocurable composition according to any one of claims 1 to 8 with a gas to generate a photocurable foam composition comprising bubbles; and
exposing the photocurable foam composition to photocure the photocurable foam composition.

14. The method for manufacturing a foam according to claim 13, wherein the generating of the photocurable foam composition comprises:

a first step of supplying the photocurable composition which is pressure fed in a first conduit and the gas which is pressure fed via a second conduit using a first pump, and mixing the photocurable composition and the gas to generate a mixture;
a second step of dispersing the gas into the photocurable composition in a dispersion conduit in a state where the mixture is pressurized; and
a third step of foaming the mixture by discharging the mixture which has passed through the dispersion conduit so as to generate the photocurable foam composition.

15. The method for manufacturing a foam according to claim 13 or 14, wherein the exposing is LED exposure.

16. The method for manufacturing a foam according to any one of claims 13 to 15, wherein an oxygen concentration on a surface of the photocurable foam composition when the photocurable foam composition is exposed is equal to or less than 3% by volume.

17. The method for manufacturing a foam according to any one of claims 13 to 16, wherein among (I) the generating of the photocurable foam composition, (II) setting the oxygen concentration on the surface of the photocurable foam composition to equal to or less than 3% by volume and (III) the curing of the photocurable foam composition by the exposing, (I) and (III) or all of (I) to (III) are achieved with a manipulator simultaneously or continuously.

18. The method for manufacturing a foam according to any one of claims 13 to 17, wherein the setting of the oxygen concentration on the surface of the photocurable foam composition to equal to or less than 3% by volume is performed by a method of spraying a gas other than oxygen to the surface of the photocurable foam composition.

19. The method for manufacturing a foam according to any one of claims 13 to 18, wherein the setting of the oxygen concentration on the surface of the photocurable foam composition to equal to or less than 3% by volume is performed by discharging the gas other than oxygen from the photocurable foam composition when the photocurable foam composition is generated.

## INTERNATIONAL SEARCH REPORT

| | International application No. |
| --- | --- |
| | **PCT/JP2022/013450** |

| A. | CLASSIFICATION OF SUBJECT MATTER |
| --- | --- |

*C08F 290/06*(2006.01)i; *C08F 2/50*(2006.01)i; *C08J 9/30*(2006.01)i; *C08G 18/00*(2006.01)i; *C08G 18/67*(2006.01)i
FI:   C08F290/06; C08G18/67; C08G18/00 F; C08F2/50; C08J9/30

According to International Patent Classification (IPC) or to both national classification and IPC

| B. | FIELDS SEARCHED |
| --- | --- |

Minimum documentation searched (classification system followed by classification symbols)

C08F290/06; C08F2/50; C08J9/30; C08G18/00; C08G18/67

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 6-332171 A (HITACHI CHEMICAL CO., LTD.) 02 December 1994 (1994-12-02) claims 1, 2, paragraphs [0009]-[0013], [0018], [0030]-[0040] | 1-5, 7, 12 |
| A | JP 2008-156544 A (INOAC CORP.) 10 July 2008 (2008-07-10) entire text | 1-19 |
| A | JP 2003-105320 A (NIPPON MEKTRON LTD.) 09 April 2003 (2003-04-09) entire text | 1-19 |
| A | JP 64-112 A (THREE BOND CO., LTD.) 05 January 1989 (1989-01-05) entire text | 1-19 |
| A | WO 96/10594 A1 (ZEON RAIZU KK) 11 April 1996 (1996-04-11) entire text | 1-19 |

| ☐ Further documents are listed in the continuation of Box C. | ☑ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |
| Date of the actual completion of the international search<br><br>**23 May 2022** | Date of mailing of the international search report<br><br>**07 June 2022** |
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

INTERNATIONAL SEARCH REPORT
Information on patent family members

International application No.

**PCT/JP2022/013450**

| Patent document cited in search report | | | Publication date (day/month/year) | Patent family member(s) | | | Publication date (day/month/year) |
|---|---|---|---|---|---|---|---|
| JP | 6-332171 | A | 02 December 1994 | (Family: none) | | | |
| JP | 2008-156544 | A | 10 July 2008 | (Family: none) | | | |
| JP | 2003-105320 | A | 09 April 2003 | (Family: none) | | | |
| JP | 64-112 | A | 05 January 1989 | US entire text | 4985523 | A | |
| WO | 96/10594 | A1 | 11 April 1996 | US entire text | 5945463 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5693799 B

- WO 3482309 A